Europäisches Patentamt

European Patent Office

Office européen des brevets

(19)

(11) **EP 1 151 362 B1**

(12) **FASCICULE DE BREVET EUROPEEN**

(45) Date de publication et mention
de la délivrance du brevet:
**13.11.2002 Bulletin 2002/46**

(51) Int Cl.[7]: **G05D 1/06**, G01S 15/50

(21) Numéro de dépôt: **00906432.0**

(86) Numéro de dépôt international:
**PCT/FR00/00417**

(22) Date de dépôt: **18.02.2000**

(87) Numéro de publication internationale:
**WO 00/049477 (24.08.2000 Gazette 2000/34)**

(54) **PROCEDE DE STABILISATION AU POINT FIXE D'UN VEHICULE SOUS-MARIN**

VERFAHREN ZUR STABILISIERUNG EINES UNTERWASSERFAHRZEUGS AN EINEM FIXPUNKT

METHOD FOR FIXED POINT STABILISATION OF A SUBMARINE VEHICLE

(84) Etats contractants désignés:
**DE GB NL**

(30) Priorité: **19.02.1999 FR 9902107**

(43) Date de publication de la demande:
**07.11.2001 Bulletin 2001/45**

(73) Titulaire: **Thales Underwater Systems SAS
06903 Sophia Antipolis (FR)**

(72) Inventeurs:
• **DOISY, Yves,
Thomson-CSF Propriété Intellectuelle
F-94117 Arcueil Cedex (FR)**
• **MIO, Karine,
Thomson-CSF Propriété Intellectuelle
F-94117 Arcueil Cedex (FR)**

(74) Mandataire: **Desperrier, Jean-Louis
Thales Intellectual Property,
13, avenue du Prés. Salvador Allende
94117 Arcueil Cédex (FR)**

(56) Documents cités:
**WO-A-96/03662**

• **DOISY Y: "General motion estimation from
correlation sonar" IEEE JOURNAL OF OCEANIC
ENGINEERING, APRIL 1998, IEEE, USA, vol. 23,
no. 2, pages 127-140, XP002119671 ISSN:
0364-9059**

**Description**

La présente invention se rapporte aux procédés qui permettent de stabiliser au point fixe un véhicule sous-marin en utilisant des techniques sonar de repérage.

On connaît beaucoup de systèmes de positionnement de navires qui utilisent un repérage acoustique par rapport à des bouées répondeuses posées sur le fond de la mer. Ces navires sont généralement munis d'un émetteur dont le signal déclenche la réponse de ces bouées. En mesurant les durées écoulées entre l'instant d'émission depuis le bateau et l'instant de réception des signaux des bouées à bord du bateau, on détermine les distances entre le bateau et les bouées et donc sa position par triangulation, Un tel système est par exemple décrit dans le brevet US 4 229 809.

On connaît par ailleurs les lochs à corrélation dans lesquels on utilise les signaux réfléchis sur le fond de la mer et provenant d'une série d'émissions successives pour déterminer le déplacement du véhicule dans le plan horizontal en procédant à une corrélation entre ces signaux successifs. Cette technique est notamment décrite dans un article de Frank R. DICKEY et John A. EDWARDS paru dans les page 255 à 264 des « Proceedings IEEE - Position Location and Navigation » du Symposium de San Diego des 6 au 9 Novembre 1978.

L'estimation du déplacement d'un réseau de sonar en effectuant les corrélations des signaux rétrodiffusés est connue d'un article de Doisy paru dans les pages 127-140 de «IEEE Journal of Oceanic Engineering» "General motion estimation from correlation sonar", vol 23, Avril 1998.

Pour se passer des bouées répondeuses, l'invention propose un procédé de stabilisation au point fixe d'un véhicule sous-marin comportant une antenne sonar bidimensionnelle émettant des signaux sonar vers le fond marin avec une récurrence déterminée, principalement caractérisé en ce que l'on reçoit sur cette antenne des signaux rétrodiffusés par le fond marin à partir des signaux émis par l'antenne, que l'on corrèle les signaux ainsi reçus à chaque récurrence avec les signaux de la première récurrence pris comme signaux de référence, que l'on recherche le maximum de la corrélation ainsi effectuée par rapport à une première variable $\delta$ représentant le déplacement du véhicule sous-marin dans le plan horizontal et par rapport à une deuxième variable $\delta_z$ représentant le déplacement de ce véhicule en immersion, et que l'on commande les organes de navigation du véhicule sous-marin en rétroaction à partir des valeurs ainsi obtenues des variables.

Selon une autre caractéristique, on effectue les corrélations sur des tranches de temps $\Delta t_1$ prises successivement sur le signal de rétrodiffusion entre le début de réception de ce signal rétrodiffusé et le début de l'émission de la récurrence suivante.

Selon une autre caractéristique, les signaux émis sur une succession de n récurrences sont codés par des codes disjoints, que l'émission est effectuée à une cadence n fois plus importante que celle qui serait nécessaire pour émettre un code unique, et que l'on effectue la corrélation de chaque code pendant l'émission des autres.

Selon une autre caractéristique, pour diminuer le nombre de calculs nécessaires pour obtenir une mesure correct on détermine l'altitude du véhicule par rapport au fond marin à l'aide d'un capteur distinct pour limiter l'amplitude de la variation du déplacement dans le sens vertical du véhicule sous-marin à prendre en compte dans ces calculs.

D'autres particularités et avantages de l'invention apparaîtront clairement dans la description suivante, présentée à titre d'exemple non limitatif en regard des figures annexées qui représentent :

- la figure 1, une vue de côté d'un véhicule sous-marin stabilisé à peu de distance d'une structure elle-même sous-marine ;
- la figure 2, une vue schématique en plan d'une antenne acoustique d'émission/réception d'un dispositif permettant la mise en oeuvre de l'invention ;
- la figure 3, une vue de côté d'un graphique de propagation des signaux dans un système selon l'invention, lorsque le véhicule se déplace horizontalement ;
- la figure 4, une vue de côté de la propagation des signaux dans ce même système, lorsque le véhicule se déplace verticalement ;
- la figure 5, un graphique des signaux et de leur exploitation dans le temps ; et
- la figure 6, un diagramme de traitement des signaux, selon l'invention.

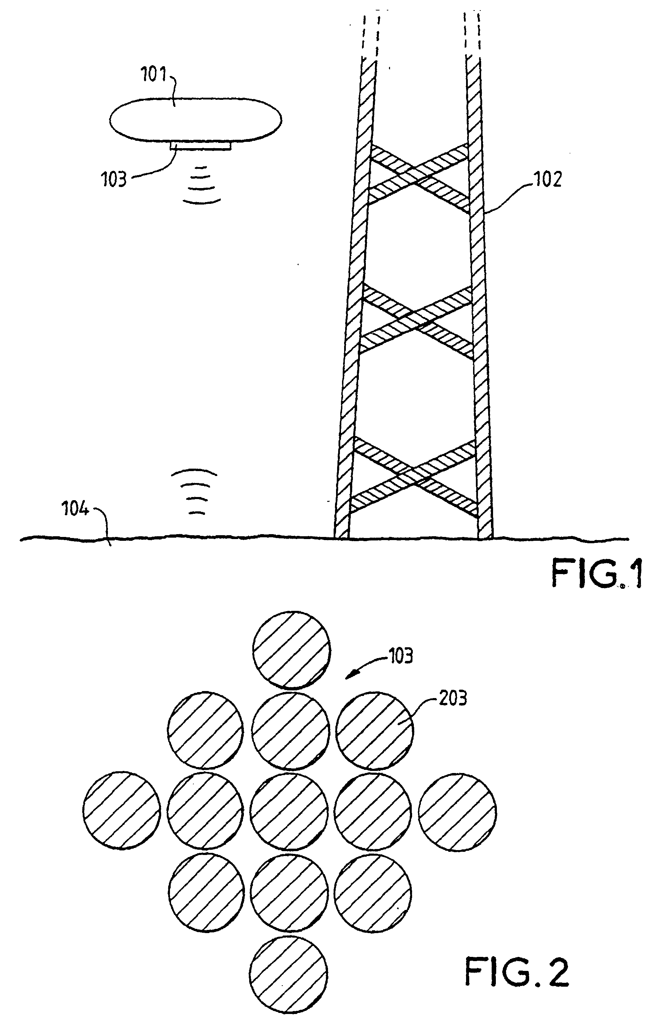

On a représenté sur la figure 1 un véhicule sous-marin autopropulsé 101 qui stationne au point fixe à proximité d'une structure sous-marine 102 ancrée sur le fond de la mer 104, dans le but par exemple d'effectuer une inspection de cette structure,

Pour se maintenir au point fixe, le véhicule est muni d'organes de propulsion adéquats, un ensemble d'hélices orientables par exemple. Pour actionner ces hélices de manière à rester immobile au sein de la mer, il comporte des moyens selon l'invention qui permettent à l'aide d'une antenne bidirectionnelle 103 d'émettre des signaux acoustiques vers le fond de la mer 104. Ces signaux acoustiques sont réfléchis par le fond sous-marin vers l'antenne, et l'analyse des signaux reçus permet d'élaborer à destination de moteurs des hélices les signaux de commande pour maintenir le point fixe.

Suivant une réalisation préférée de l'invention, représentée en figure 2, l'antenne 103 est formée d'un ensemble de transducteurs 203 formant un réseau dont les distances entre transducteurs sont inférieures à la demi-longueur d'onde des signaux émis.

En alimentant ces transducteurs à l'aide d'un signal connu dans l'art, ceux-ci émettent simultanément une impulsion acoustique qui est dirigée vers le fond de la mer 104. Avantageusement, on appliquera aux signaux émis par les antennes une pondération de type connu qui permet de conserver un diagramme d'émission de large ouverture angulaire tout en alimentant l'ensemble des transducteurs de l'antenne, permettant ainsi d'opérer sur des fonds relativement profonds.

A titre de variante, on pourra utiliser un seul transducteur comme émetteur, par exemple le transducteur central , en spécialisant les autres transducteurs dans le rôle de récepteurs. Ceux-ci pourront alors n'être que de simples hydrophones.

Pour faire fonctionner l'appareil, on calcule le déplacement de l'antenne parallèlement au fond de la mer entre une première émission, qui constitue l'émission de référence, et les émissions suivantes. Le déplacement ainsi mesuré correspond au signal d'erreur utilisé dans la boucle d'asservissement qui permet de ramener le véhicule, et donc l'antenne qu'il supporte, à sa position d'origine.

Le traitement utilisé consiste à rechercher le maximum de la corrélation spatio-temporelle des signaux reçus par les capteurs avec l'émission de référence et les suivantes :

Ainsi en désignant par $s_i(r_k,t)$ le signal du transducteur, repéré par sa position $r_k$ par rapport au centre de phase de l'émission, et correspondant à l'écho reçu de la $i^{\text{ème}}$ émission à l'instant t après le début de cette émission, on recherche par rapport aux variables $\vec{D}$ et $\tau$ le maximum de la fonction déterminé par la formule :

$$C(\vec{D},t,\tau) = \frac{1}{N} \sum_{k=1}^{N} s_i(\vec{r_k} + \vec{D}, t + \tau) \cdot s_l^*(\vec{r_k}, t)$$

Dans cette formule, $\vec{D}$ désigne le vecteur de translation de l'antenne dans son propre plan, supposé horizontal, N le nombre de transducteurs de l'antenne se recouvrant entre la position initiale et la position déplacée du vecteur, $\vec{D}$ et $\tau$ le retard correspondant à une éventuelle composante verticale du déplacement de l'antenne d'une distance $\delta z$ dans le sens vertical.

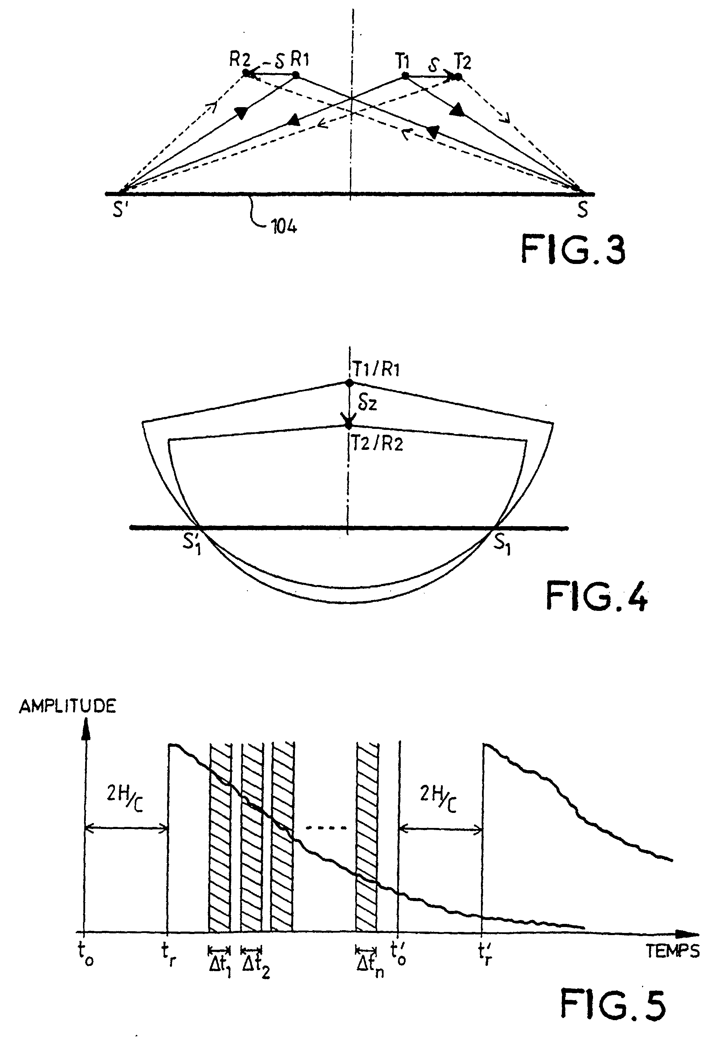

En se référant à la figure 3, les signaux émis à un même instant par un émetteur $T_1$ de l'antenne et qui arrivent au bout d'un temps déterminé en même temps sur un récepteur $R_1$ de ladite antenne ont été rétrodiffusés par une portion du fond sous marin 104 ayant sensiblement la forme d'un cercle centré sur l'axe médian à $T_1$ et $R_1$ et dont on ne voit sur la figure que les deux points symétriques S et S' correspondant à l'intersection de ce cercle avec le plan vertical passant par $T_1$ et $R_1$. Dans la pratique, et compte tenu de ce que les impulsions ne sont pas infiniment brèves, ce cercle sera en faite une couronne.

A la récurrence suivante, si l'émetteur $T_1$ s'est déplacé dans un plan horizontal d'une distance $\delta$ pour arriver dans une position $T_2$, les signaux reçus sur l'antenne au bout de la même durée que précédemment seront ceux réémis par le cercle auquel appartiennent S et S' et ils seront reçus sur un récepteur $R_2$ de cette antenne distant de $R_1$ d'une longueur -$\delta$ symétrique par rapport au déplacement $\delta$ entre $T_1$ et $T_2$. Ceci résulte de considérations géométriques élémentaires qui font que $T_1 S R_1 = T_2 S R_2 = T_1 S' R_1 = T_1 S' R_2$.

Dans ces conditions, c'est la corrélation entre les signaux reçus par $R_1$ et $R_2$ qui est maximale, ce qui correspond à un maximum de la fonction C, obtenu pour $\vec{D}$ = 2$\delta$ et $\tau$ = 0; cette dernière condition signifiant qu'il n'y a pas de déplacement vertical.

Dans le cas où le véhicule, et donc l'antenne, se déplace verticalement d'une distance $\delta_z$, des considérations géométriques élémentaires, représentées sur la figure 4, montrent que le maximum de la corrélation sera obtenu pour un retard $\tau$ = 2$\delta_z$/c ,où c est la vitesse des ondes acoustiques dans l'eau,

Enfin, dans le cas où le véhicule prend du gîte, ce qui entraîne une inclinaison de l'antenne d'un angle $\alpha$ par rapport à l'horizontale, le déplacement $\delta$ de l'antenne, et donc de l'engin, s'obtient à partir de D par la relation :

$$\delta = \frac{\vec{D}\cos \alpha}{2}$$

Chaque émission du signal acoustique par l'antenne correspond à une récurrence, et pendant chacune de ces récurrences on effectue plusieurs estimations du déplacement horizontal de l'antenne, ce qui permet de commander les propulseurs du véhicule de manière à compenser ce déplacement.

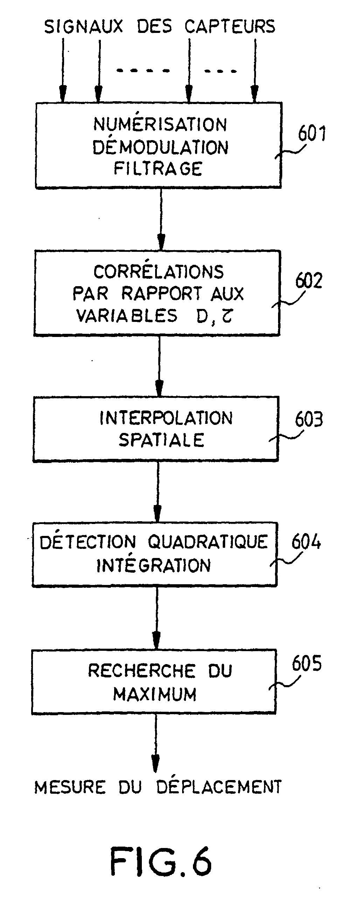

La mise en oeuvre de ce procédé consiste, comme représenté sur la figure 5, prise en regard de l'organigramme de la figure 6, à corréler le signal de réception de la récurrence i en cours avec le signal d'émission de la première récurrence de rang 1, lequel a auparavant été mis en mémoire.

Sur cette figure 5, on a représenté deux récurrences successives correspondant à des signaux émis aux temps $T_0$ et $T'_0$. Le signal de réverbération, réémis par le fond sous-marin, commence à arriver pour chaque récurrence respectivement aux instants $t_r$ et $t'_r$. Ces instants correspondent au temps d'aller et retour entre l'antenne et l'emplacement le plus près du sol, qui se situe généralement à la verticale en dessous du véhicule. Ce temps d'aller et de retour est donné par 2H/c, ou H est la distance entre l'antenne 103 et le fond sous-marin 104 à la verticale du véhicule.

Les signaux reçus des capteurs de l'antenne sont d'abord numérisés, puis démodulés et filtrés dans un module 601.

Dans la zone utile entre $t_r$ et $t'_0$, on effectue dans un module 602 plusieurs mesures de $\vec{D}$ en effectuant une série de corrélations sur des tranches temporels $\Delta t_1 \Delta t_2$.... $\Delta t_n$. Ces corrélations sont effectués sur un signal qui décroît dans le temps, en raison de l'absorption des ondes acoustiques dans le milieu marin au fur et à mesure que la longueur du trajet aller-retour augmente. Si le niveau du signal reste suffisant à $t'_0$, on arrête les corrélations à ce moment. Dans le cas contraire on les arrête lorsque, en raison du bruit, le niveau du signal n'est plus suffisant pour obtenir un résultat correct.

Pour effectuer cette corrélation, on calcule la fonction C déterminée par la formule 1 pour une série d'instants t pris dans des tranches temporelles $\Delta t_i$ avec i variant de 1 à n, et en prenant plusieurs valeurs de $\vec{D}$ et de $\tau$. Afin de limiter la charge de calcul, on n'effectue ces calculs de la fonction C que pour des déplacements $\vec{D}$ correspondant au pas des transducteurs, en supposant que ceux-ci sont répartis sur une grille présentant des intervalles de $\lambda/2$.

Dans ces conditions, le pic de corrélation a toutes les chances de se trouver entre deux des valeurs calculées de cette fonction C. Pour pouvoir alors affiner les résultats, on procède ensuite dans un module 603 à une interpolation spatiale de ceux-ci. Le résultat de ces calculs donne donc plusieurs valeurs interpolées de la fonction C.

On accumule alors les modules carrés de ces valeurs sur chacune des tranches temporelles $\Delta i$ en effectuant dans un module 604 une détection quadratique suivie d'une intégration qui sont déterminées par la formule :

$$F(\vec{D}, t, \tau) = \frac{1}{\Delta t_i} \int_{t-\frac{\Delta t_i}{2}}^{t+\frac{\Delta t_i}{2}} C(\vec{D}, \tau, u)$$

La fin du traitement consiste à rechercher, dans un module 605, le maximum de cette fonction F, pour obtenir la valeur de $\vec{D}$ et donc celle du déplacement $\delta$.

A titre d'amélioration, si la fréquence des échantillons temporels obtenus en sortie du module 601 est trop faible, l'invention propose d'effectuer une interpolation temporelle sur ces échantillons afin d'améliorer la précision de l'estimation du maximum.

Selon une autre variante de l'invention, on effectue la corrélation dans l'espace des fréquences en procédant, de manière connue, à une transformation de Fourrier rapide du type FFT suivie d'un produit des spectres obtenus et d'une FFT inverse sur ce produit.

Afin d'augmenter la cadence des mesures, l'invention propose d'émettre des signaux successifs formant des codes disjoints, par exemple des fréquences différentes, avec une cadence multipliée par le nombre de codes émis. Ceci permet de corréler la récurrence de l'un de ces codes pendant que l'on émet les autres. Dans la réalisation la plus simple de cette variante de l'invention, on émettra successivement deux fréquences différentes $f_1$ et $f_2$ à une cadence double.

Comme expliqué plus haut, le traitement consiste à effectuer les calculs avec un ensemble relativement aléatoire de valeurs de $\vec{D}$ et de $\tau$. La charge de calcul est alors, en dépit des précautions expliquées plus haut, relativement importante. Une manière de limiter cette charge de calcul consiste à encadrer les valeurs de $\vec{D}$ et de $\tau$ dans des limites déterminées par des hypothèses à priori sur la variation de ces paramètres. Cette limitation n'est pas très facile à apprécier pour $\vec{D}$, mais elle est plus simple à obtenir pour $\tau$ en utilisant un capteur d'immersion monté sur le véhicule sous-marin. Celui-ci permet d'obtenir en permanence ses variations d'altitude par rapport au fond sous-marin, ou tout au moins une estimation de celle-ci avec une précision suffisante pour limiter grandement les valeurs de $\tau$ utilisées dans les calculs.

**EP 1 151 362 B1**

### Revendications

1. Procédé de stabilisation au point fixe d'un véhicule sous-marin comportant une antenne sonar bidimensionnelle (103) émettant des signaux sonar vers le fond marin avec une récurrence déterminée, **caractérisé en ce que** l'on reçoit (601) sur cette antenne des signaux rétrodiffusés par le fond marin à partir des signaux émis par l'antenne, que l'on corrèle (602) les signaux ainsi reçus à chaque récurrence avec les signaux de la première récurrence pris comme signaux de référence, que l'on recherche (605) le maximum de la corrélation ainsi effectuée par rapport à une première variable $\delta$ représentant le déplacement du véhicule sous-marin dans le plan horizontal et par rapport à une deuxième variable $\delta_z$ représentant le déplacement de ce véhicule en immersion, que l'on commande les organes de navigation du véhicule sous-marin (101) en rétroaction à partir des valeurs ainsi obtenues des variables, et **en ce que** l'on effectue les corrélations (602) sur des tranches de temps $\Delta t_i$ prises successivement sur le signal de rétrodiffusion entre le début de réception de ce signal rétrodiffusé et le début de l'émission de la récurrence suivante.

2. Procédé selon la revendication 1, **caractérisé en ce que** les signaux émis sur une succession de n récurrences sont codés par des codes disjoints, que l'émission est effectuée à une cadence n fois plus importante que celle qui serait nécessaire pour émettre un code unique, et que l'on effectue la corrélation de chaque code pendant l'émission des autres.

3. Procédé selon l'une quelconque des revendications 1 et 2, **caractérisé en ce que** pour diminuer le nombre de calculs nécessaires pour obtenir une mesure correct on détermine l'altitude du véhicule par rapport au fond marin à l'aide d'un capteur distinct pour limiter l'amplitude de la variation du déplacement dans le sens vertical du véhicule sous-marin à prendre en compte dans ces calculs.

### Patentansprüche

1. Verfahren zur Stabilisierung eines Unterwasserfahrzeugs an einem festen Punkt, wobei das Fahrzeug eine zweidimensionale Sonarantenne (103) aufweist, die Sonarsignale mit einer bestimmten Wiederholungsrate zum Meeresgrund sendet, **dadurch gekennzeichnet, daß** bei dieser Antenne vom Meeresgrund zurückgestreute Signale, die von von der Antenne gesendeten Signalen stammen, empfangen werden (601), daß die auf diese Weise empfangenen Signale bei jeder Wiederholung mit den als Referenzsignale betrachteten Signalen der ersten Wiederholung korreliert werden (602), daß das Maximum der auf diese Weise ausgeführten Korrelation in bezug auf eine erste Variable $\delta$, die die Verlagerung des Unterwasserfahrzeugs in der horizontalen Ebene repräsentiert, und in bezug auf eine zweite Variable $\delta_2$, die die Verlagerung dieses Fahrzeugs in Tiefenrichtung repräsentiert, gesucht wird (605), daß die Navigationsorgane des Unterwasserfahrzeugs (101) in Rückkopplung auf die auf diese Weise erhaltenen Werte der Variablen gesteuert werden und daß die Korrelationen (602) in den Zeitschlitzen $\Delta t_i$, die nacheinander an dem Rückstreusignal zwischen dem Beginn des Empfangs dieses zurückgestreuten Signals und dem Beginn des Sendens der folgenden Wiederholung abgegriffen werden, ausgeführt werden.

2. Verfahren nach Anspruch 1, **dadurch gekennzeichnet, daß** die in einer Folge von n Wiederholungen gesendeten Signale durch getrennte Codes codiert werden, daß das Senden mit einem Takt erfolgt, der n mal größer als jener ist, der notwendig wäre, um einen einzigen Code zu senden, und daß die Korrelation jedes Codes während des Sendens anderer Codes ausgeführt wird.

3. Verfahren nach einem der Ansprüche 1 und 2, **dadurch gekennzeichnet, daß** für die Verringerung der Anzahl von Berechnungen, die notwendig sind, um einen korrekten Meßwert zu erhalten, die Höhe des Fahrzeugs in bezug auf den Meeresgrund mit Hilfe eines eigenen Sensors bestimmt wird, um die Amplitude der Schwankung der Verlagerung in vertikaler Richtung des Unterwasserfahrzeugs, die in diesen Berechnungen zu berücksichtigen ist, zu begrenzen.

### Claims

1. A method of stabilising at the fixed point a submarine vehicle including a two-dimensional sonar antenna (103) emitting sonar signals towards the seabed with a particular repetition frequency, **characterised in that** signals emitted by the antenna and backscattered from the seabed are received by the antenna (601), the signals received in this way on each repetition are correlated (602) with the signals of the first repetition taken as reference signals, the maximum of the correlation effected in this way relative to a first variable $\delta$ representing the displacement of the submarine vehicle in the horizontal plane and relative to a second variable $\delta_2$ representing the displacement of the vehicle in the depthwise direction is determined (605), the navigation units of the submarine vehicle (101) are controlled by feedback based on values of the variables obtained in this way, and the correlations are effected (602) over time slices $\Delta t_1$ taken successively on the backscattered signal between the start of reception of said backscattered signal and the start of emission of the next repetition.

2. A method according to claim 1, **characterised in that** the signals emitted over a succession of n repetitions are coded using disjoint codes, **in that** the emission is effected at a timing rate n times greater than would be necessary to emit a single code, and **in that** the correlation of each code is effected during the emission of the others.

3. A method according to either claim 1 or claim 2, **characterised in that**, to reduce the number of computations necessary to obtain a correct measurement, the altitude of the vehicle relative to the seabed is determined by means of a separate sensor to limit the amplitude of the variation in the displacement in the vertical direction of the submarine vehicle to be taken into account in said computations.

FIG.1

FIG.2

FIG.3

FIG.4

FIG.5

SIGNAUX DES CAPTEURS

```
┌─────────────────────┐
│    NUMÉRISATION      │   601
│    DÉMODULATION      │
│      FILTRAGE        │
└─────────────────────┘
           │
           ▼
┌─────────────────────┐
│    CORRÉLATIONS      │   602
│   PAR RAPPORT AUX    │
│   VARIABLES  D, τ    │
└─────────────────────┘
           │
           ▼
┌─────────────────────┐
│    INTERPOLATION     │   603
│      SPATIALE        │
└─────────────────────┘
           │
           ▼
┌─────────────────────┐
│ DÉTECTION QUADRATIQUE│   604
│      INTÉGRATION     │
└─────────────────────┘
           │
           ▼
┌─────────────────────┐
│    RECHERCHE DU      │   605
│      MAXIMUM         │
└─────────────────────┘
           │
           ▼
```

MESURE DU DÉPLACEMENT

# FIG.6